# FASCICULE DE BREVET EUROPEEN

(11) **EP 2 210 472 B1**
(45) Date de publication et mention de la délivrance du brevet: **04.04.2012**
(21) Numéro de dépôt: 09358012.4
(22) Date de dépôt: 03.12.2009
(51) Int. Cl.: A01D 46/28, A01D 46/26

(54) **Tête de récolte et machine automotrice enjambeuse en faisant application, utilisables pour la récolte de haies fruitières**
Erntekopf und ihr verwendende selbstfahrende Erntemaschine mit Förderband für die Ernte von Obstspalieren
Harvesting head and self-propelled high-clearance machine applying same, used for harvesting berries from hedges

(30) Priorité: 10.12.2008 FR 0806916
(43) Date de publication de la demande: 28.07.2010
(73) Titulaire: PELLENC (Société Anonyme), 84120 Pertuis (FR)
(72) Inventeur: Pellenc, Roger, 84120 Pertuis (FR); Gialis, Jean-Marc, 84460 Cheval Blanc (FR); Rolland, Christian, 84160 Cucuron (FR)
(74) Mandataire: Marek, Pierre

(56) Documents cités:
- FR-A- 2 597 294
- FR-A- 2 607 091
- FR-A- 2 664 465
- US-A- 3 473 311
- US-A1- 2005 000 204

## Description

La présente invention concerne une tête de récolte de petits fruits produits par des haies fruitières, en particulier en arboriculture fruitière. Elle concerne également les machines automotrices enjambeuses en faisant application, c'est à dire les ensembles constitues par un véhicule automoteur enjambeur portant une tête de récolte montée à l'arrière du châssis de ce véhicule.

Aujourd'hui, pour la récolte des oliviers cultives en haies fruitières, certains oléiculteurs utilisent des machines de grandes dimensions similaires aux machines à vendanger le raisin, notamment dans les régions ou des vignes sont cultivées avec un palissage relativement élevé (par exemple de l'ordre de 2 m).

Ces machines comportent une tête de récolte comprenant généralement un système de secouage constitué de deux ensembles de détachement des fruits montes en vis-à-vis et séparés par un espace vertical, ces ensembles comportant, chacun, une pluralité de secoueurs superposes, par exemple constitues par des barreaux flexibles, fixes, par l'intermédiaire de leurs extrémités, à deux arbres verticaux dont l'un au moins est un arbre d'actionnement oscillant assujetti à une commande de secouage permettant de lui communiquer un mouvement oscillatoire. Une telle tête de récolte comprend également deux systèmes de convoyage latéraux pour recevoir et acheminer les fruits récoltes jusqu'à un dispositif de réception (benne ou autre), les portions horizontales de ces systèmes de convoyage assurant aussi l'étanchéité autour de la partie basse des troncs (ceps de vigne), au-dessous des ensembles de secouage.

La tête de récolte est montée fixement sur la partie arrière du châssis d'un véhicule automoteur enjambeur qui peut être équipé de moyens permettant de le relever ou de l'abaisser entre une position basse de transport sur route et une position haute de travail; dans ce cas la tête de récolte est assujettie audit châssis dont elle accompagne par conséquent les mouvements de soulèvement ou d'abaissement.

Le document FR 2.607.091 décrit une machine agricole de type tracteur enjambeur ou machine de récolte de culture en ligne.

Selon ce document, des moyens sont prévus pour déplacer verticalement et simultanément la cabine 4 de conduite de la machine par rapport au châssis 2 de celle-ci et l'outil 5 constituant la tête de récolte 1 est monté sur un support fixé à ladite cabine de conduite. De la sorte, la partie inférieure de l'outil ou de la tête de récolte suit les mouvements verticaux de la cabine de conduite et occupe des positions variables en hauteur par rapport au sol, selon que la cabine constituant le châssis porteur de l'outil, se trouve placée en position haute ou en position basse.

Un inconvénient de ces machines, quelle que soit leur destination est constitué par leurs dimensions importantes (de l'ordre de 3 m de large et 4 m de hauteur), ce qui pose des problèmes pour leur transport en camion à plateforme ou leurs déplacements sur route, pour aller d'une plantation à une autre.

Toutefois, la contrainte majeure imposée par les machines actuellement utilisées est constituée par le passage sous la voûte du porteur enjambeur dont la hauteur peut varier entre 2 ,20 m et 2,80 m, et les capacités de la tête de battage à secouer une haie fruitière arboricole au lieu d'une vigne palissée. La partie active de cette tête de battage présentant une hauteur de l'ordre de 1,80 m.

Le fait que l'on dispose d'une hauteur de battage et 1.80 m et d'un passage sous voûte d'une hauteur de 2,20 m, oblige le conducteur de la machine de récolte à régler le porteur enjambeur en position haute (2,80 m) pour pouvoir laisser passer les arbres fruitiers (par exemple oliviers) sans les casser, mais le problème qui se crée alors est que le système d'étanchéité inférieur de la tête de récolte solidaire des mouvements de soulèvement et d'abaissement dudit porteur enjambeur, se trouve en plein dans la végétation, au niveau des branches, au lieu d'étancher autour du tronc des arbres, ce qui occasionne des fuites importantes de fruits au sol, casse énormément de branches et, par la même occasion, laisse en place, sur la partie basse des arbres, tous les fruits qui n'ont pas été en contact avec les bras cueilleurs de la tête de récolte.

Dans le cas contraire, si le conducteur régie le porteur enjambeur dans sa position la plus basse, pour ne pas laisser de fruits et pour éviter les fuites au sol, les oliviers, (dans le cas d'une oliveraie) qui ont une hauteur supérieure a 2.20 m vont forcer pour passer sous la voûte dudit porteur enjambeur au risque de les casser au ras du sol.

Par contre, si malgré tout, les oliviers arrivent à se tordre sans casser pour passer sous la voûte du porteur enjambeur (2.20 m), la tête de récolte (1.80 m) va laisser tous les fruits qui sont sur la partie supérieure des arbres, lors du passage de ces derniers dans ladite tête de récolte et en abîmer une grande partie avec le mécanisme de battage.

Il existe aussi des machines hybrides conçues pour la récolte du raisin et des olives qui sont en fait des machines a vendanger customisées avec un passage sous voûte de l'ordre de 2.40 m à 3 m et une hauteur de battage de 2 m à 2.80 m. Ce sont pour l'instant les seules qui fonctionnent effectivement dans les vergers d'oliviers.

Un important inconvénient de ces machines, est qu'elles sont démesurément grandes pour pallier les contraintes des machines a vendanger standards citées ci-dessus.

Donc, ce type de machine est plus haut, plus large, plus long et plus lourd et plus cher. Sa polyvalence est remise en question des que l'on veut récolter du raisin, en raison du fait qu'il a été surdimensionné, ce type de machine n'est plus adapté parfaitement aux vignobles, car il devient pratiquement impossible d'effectuer les demi-tours en bout de rang lors des vendanges.

L'objet de la présente invention est de proposer, aux professionnels de la récolte automatique de petits fruits produits en arboriculture fruitière (olive, prune, cerise du caféier, etc.). Une tête de récolte spécialement conçue pour la récolte des haies d'oliviers (ou autre arbre fruitier cultive en haies) et destinée à être montée sur un porteur enjambeur polyvalent standard utilisable également en viticulture, de sorte a constituer un ensemble automoteur enjambeur permettant de solutionner les problèmes précédemment exposes et de remédier aux inconvénients en découlant.

Selon l'invention, ce but est atteint grâce à une machine automotrice enjambeuse pour la récolte des haies fruitières, comprenant, d'une part, un automoteur enjambeur (5) comportant un châssis (6) supporté par des moyens de sustentation (13, 14) réglables en hauteur, et, d'autre part, une tête de récolte (1) comprenant un châssis (2) en forme de portique supportant un système de secouage constitué de deux ensembles de détachement des fruits, montés en vis-à-vis et séparés par un espace vertical, et deux systèmes de réception et de convoyage pour recevoir et acheminer les fruits récoltés jusqu'à un dispositif de réception, les portions horizontales inférieures (3) de ces deux systèmes de convoyage constituant la partie inférieure de la tête de récolte (1), assurant aussi l'étanchéité, au-dessous des ensembles de secouage ; cette tête de récolte (1) étant portée par un bâti de montage (4) fixé rigidement ou apte à être fixé rigidement à l'arrière dudit véhicule enjambeur automoteur (5), caractérisée en ce que la tête de récolte (1) est reliée au bâti de montage (4) par l'intermédiaire de moyens (4a, 7, 8, 10) permettant un réglage en hauteur de celle-ci par rapport au bâti de montage (4), de sorte que lorsque ledit bâti de montage est fixé sur le châssis (6) de l'automoteur enjambeur (5), la tête de récolte se trouve également montée de façon réglable en hauteur par rapport audit automoteur enjambeur, et que la distance (D1) de la partie inférieure (3) de la tête de récolte (1) par rapport au sol (S) reste la même aussi bien lorsque l'automoteur enjambeur se trouve en position basse ou position route, que lorsque ce dernier se trouve placé en position haute correspondant à la position de travail de la machine.

Suivant une autre disposition caractéristique, le bâti de montage est relie au châssis porteur de la tête de récolte au moyen de parallélogrammes articulés latéraux.

Selon un mode d'exécution intéressant, chaque parallélogramme articule latéral comprend : l'un des côtés du bâti de montage, une biellette supérieure et une biellette inférieure reliées, par l'intermédiaire de l'une de leurs extrémités et au moyen d'articulations, en partie haute et en partie basse dudit côté, respectivement. D'autre part, les extrémités opposées desdites biellettes sont reliées, au moyen d'articulations, respectivement, à des éléments latéraux du châssis de la tête de récolte; des moyens d'actionnement permettant le déplacement des parallélogrammes articules assurant les mouvements verticaux de la tête de récolte par rapport au bâti de montage de celle-ci, c'est-à-dire par rapport à l'automoteur enjambeur, lorsque cette dernière est installée à l'arrière dudit automoteur enjambeur.

Selon un mode de réalisation préféré, ces moyens d'actionnement sont constitués par un vérin reliant, par l'intermédiaire de ses extrémités opposées et au moyen d'articulations, la biellette supérieure et la partie basse du côté correspondant du bâti de montage.

La machine automotrice enjambeuse selon l'invention comprend un véhicule porteur enjambeur comportant un châssis supporté par des moyens de sustentation réglables en hauteur et une tête de récolte réalisée de la manière indiquée ci-dessus, fixée sur la partie arrière dudit châssis par l'intermédiaire de son bâti de montage.

Selon une autre disposition caractéristique, le système de sustentation de l'automoteur enjambeur et au moins de l'un des axes d'articulation de l'une au moins des biellettes de l'un au moins des parallélogrammes articulés, sont munis de capteurs angulaires permettant d'asservir le réglage de la position de la tête de récolte par rapport audit automoteur enjambeur de sorte à maintenir ladite tête de récolte, et notamment la partie inférieure de celle-ci, à une distance programmée par rapport au sol.

Selon l'invention, cette distance reste la même, que l'automoteur enjambeur soit placé en position basse ou position route, ou que ce dernier soit placé en position haute ou position de travail.

Les buts, caractéristiques et avantages ci-dessus, et d'autres encore, ressortiront mieux de la description qui suit et des dessins annexés dans lesquels :

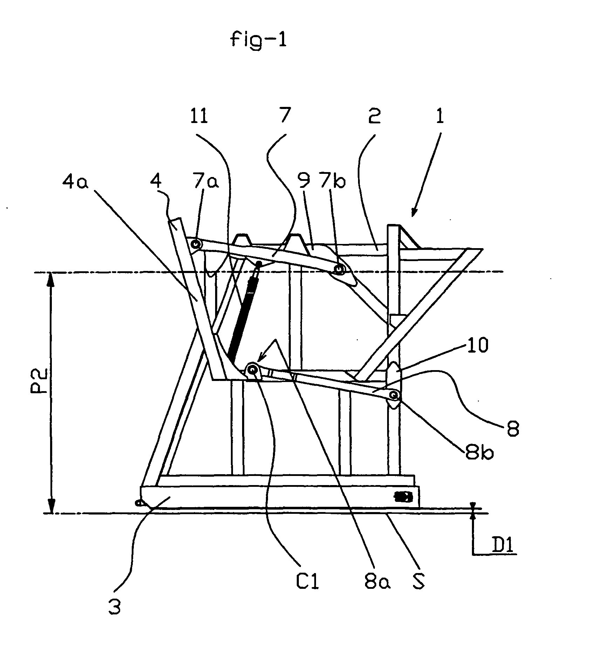

La figure 1 est une vue de côté simplifiée d'une tête de récolte selon l'invention.
La figure 2 est une vue de côté à caractère schématique d'un automoteur enjambeur polyvalent standard sur lequel peut être fixée cette tête de récolte. Cet automoteur enjambeur étant représenté en position haute.
La figure 3 est une vue de côté d'un ensemble de récolte constitue par la tête de récolte illustre a la figure 1 montée sur l'automoteur enjambeur représente sur la figure 2. Cet ensemble étant représenté en position de circulation sur route.
La figure 4 est une vue de côté analogue a la figure 3 montrant ledit ensemble dans une position de récolte.

On se reporte auxdits dessins pour décrire un exemple intéressant, bien que nullement limitatif, de la tête et de la machine de récolte selon l'invention.

La tête de récolte 1 selon l'invention comprend, de manière similaire aux machines à vendanger le raisin, un châssis 2 en forme de portique supportant, d'une part, un système de secouage (non représenté) constitue de deux ensembles de détachement des fruits, montés en vis-à-vis et séparés par un espace vertical, et d'autre part, deux systèmes de convoyage 3 pour recevoir et acheminer les fruits récoltés jusqu'à un dispositif de réception (benne ou autre).

Les portions horizontales inférieures de ces deux systèmes de convoyage assurent aussi l'étanchéité au-dessous des ensembles de secouage.

De préférence cette tête de récolte est conçue pour recevoir le plus grand nombre de bras cueilleurs (28 paires sur 3.40 m de hauteur) afin de récolter toute la hauteur du palissage tout en restant dans le gabarit de 2.50 m de largeur et 3.60 m de hauteur.

La tête de récolte 1 est portée par un bâti de montage 4 destiné à être fixé rigidement, de préférence de manière amovible, à l'arrière d'un véhicule enjambeur automoteur 5 couramment appelé automoteur enjambeur, par exemple, par l'intermédiaire du système de fixation à trois points équipant ce dernier. Plus précisément, la tête de récolte 1 est destinée à être fixée sur un automoteur enjambeur 5 comprenant un châssis 6 réglable en hauteur, de manière connu en soi.

Selon l'invention, la position de la tête de récolte 1 est réglable en hauteur par rapport au bâti de montage 4. Dans ces conditions, lorsque le bâti de montage 4 de la tête de récolte 1 est rigidement fixé sur le châssis 6 de l'automoteur enjambeur 5, elle se trouve également montée de façon réglable en hauteur par rapport audit automoteur enjambeur.

Suivant une autre disposition caractéristique, le bâti de montage 4 est relié au châssis porteur 2 de la tête de récolte au moyen de parallélogrammes articulés latéraux.

Chaque parallélogramme articulé latéral comprend : l'un des côtés 4a du bâti de montage 4, une biellette supérieure 7 et une biellette inférieure 8 reliées, par l'intermédiaire de l'une de leurs extrémités et au moyen d'articulations 7a, 8a, en partie haute et en partie basse dudit côté 4a, respectivement. D'autre part, les extrémités opposées desdites biellettes sont reliées, au moyen d'articulations 7b, 8b, respectivement, à des éléments latéraux fixes 9, 10, du châssis 2.

Des moyens d'actionnement permettent la déformation ou déplacement des parallélogrammes articulés assurant les mouvements verticaux de la tête de récolte 1 par rapport au bâti de montage 4 de ladite tête de récolte, c'est-a-dire par rapport à l'automoteur enjambeur 5, lorsque cette dernière est installée à l'arrière dudit automoteur enjambeur.

Ces moyens sont, par exemple, constitués par un vérin 11 reliant, par l'intermédiaire de ses extrémités opposées et au moyen d'articulations, la biellette supérieure 7 et la partie basse du côté 4a correspondant au bâti de montage 4. On comprend que l'allongement des vérins 11 entraîne le pivotement vers le haut des biellettes supérieures 7, tandis que la rentrée ou raccourcissement desdits vérins assure le pivotement vers le bas desdites biellettes.

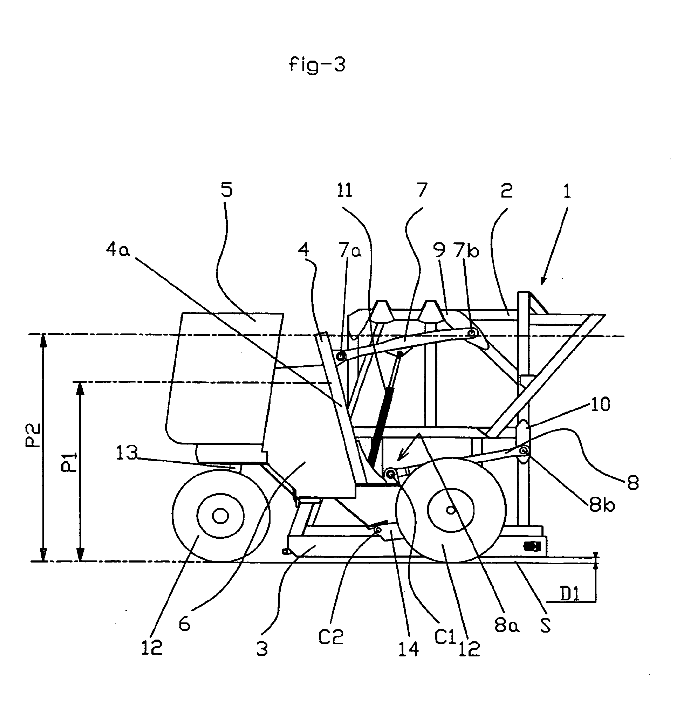

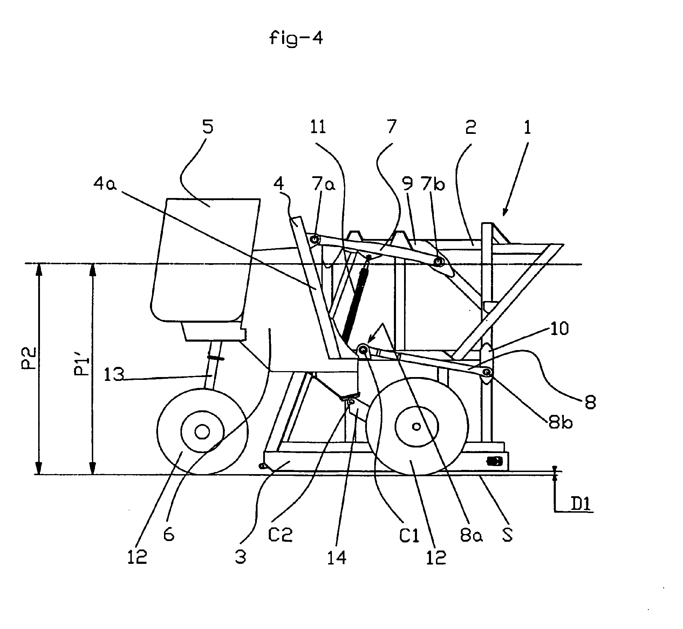

Les figures 3 et 4 illustrent une machine de récolte selon l'invention constituée d'un automoteur enjambeur 5 sur le châssis 6 et à l'arrière duquel est montée une tête de récolte comportant les dispositions caractéristiques précédemment décrites.

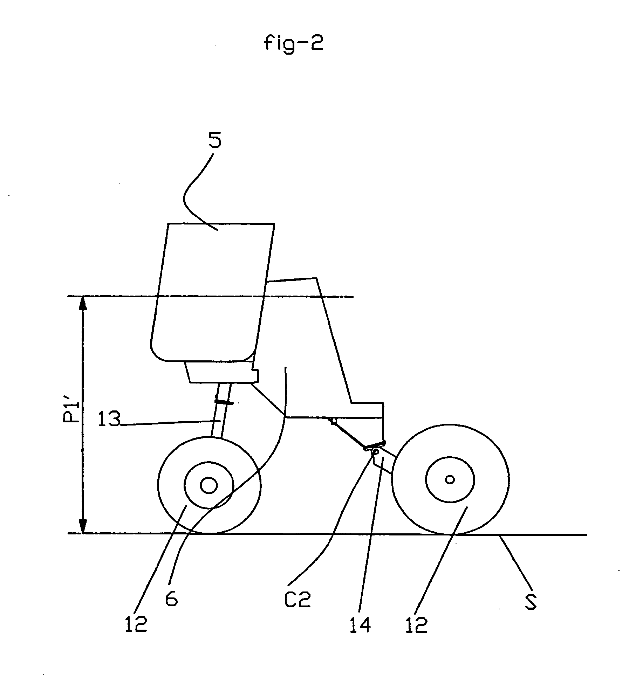

Le véhicule automoteur porteur 5 (figure 2) peut être constitue par un automoteur enjambeur polyvalent standard d'un type couramment utilisé en viticulture et équipé, de manière connue en soi, de moyens permettant le réglage en hauteur de son châssis 6 par rapport à ses roues sustentatrices 12, c'est-à-dire par rapport au sol S sur lequel sont appelées à rouler ces dernières.

Selon une disposition avantageuse, l'automoteur enjambeur 5 et la tête de récolte 1 sont agencés de manière que la hauteur du passage sous voûte P1 de l'automoteur enjambeur, est nettement inférieure, lorsque celui-ci se trouve en position basse ou position route, à la hauteur du passage sous voûte P2 de la tête de récolte 1, tandis que la hauteur du passage sous voûte P1' de l'automoteur enjambeur 5 peut être sensiblement égale ou inférieure à la hauteur du passage sous voûte P2 de ladite tête de récolte 1, en position haute dudit automoteur enjambeur correspondant à la position de travail de la machine.

L'un au moins des axes d'articulation de l'une au moins des biellettes 7 et/ou 8, de préférence l'axe d'articulation 8a des biellettes inférieures 8 est muni d'un capteur angulaire C1. D'autre part, le système de sustentation jambes télescopiques avant 13 et/ou bras de roues arrière 14) de l'automoteur enjambeur 5, de préférence les bras de roues 14, est également muni de capteurs angulaires C2. Ces capteurs C 1 et C2 sont reliés à un calculateur ou système analogue, de sorte a permettre d'asservir le réglage de la tête de récolte 1 et de l'automoteur enjambeur 5, de sorte à maintenir ladite tête de récolte 1, et notamment la partie inférieure de celle-ci, à une distance programmée 01 par rapport au sol S. Cette distance 01 reste la même aussi bien lorsque l'automoteur enjambeur se trouve en position basse ou position route, que lorsque celui-ci se trouve en position haute ou position correspondant à la position de travail de la machine.

Sur la figure 3, on remarque qu'en position route l'enjambeur 5 est baissé au maximum afin de baisser le centre de gravité et d'assurer une bonne stabilité, tandis que la tête de récolte 1 est relevée au maximum, par rapport audit enjambeur, ce qui donne une machine tout à fait standard au niveau encombrement (2,50 m de largeur x 3,60 m de hauteur) et ne nécessite pas de transport exceptionnel. D'autre part, la hauteur du passage sous voute P1 est, par exemple, de 2,20 m pour l'enjambeur, tandis que la hauteur du passage sous voûte de P2, est par exemple, de 3,40 m pour la tête de récolte 1.

Sur la figure 4, on voit qu'en position travail, l'enjambeur 5 est place en position relevée au maximum grâce à son système de sustentation réglable et la tête de récolte 1 est descendue au maximum par rapport audit enjambeur ce qui donne une hauteur de passage sous voûte P1' de 2,80 m pour l'enjambeur et une hauteur de passage sous voûte P2 de 3,40 m pour la tête de récolte 1 équipée de bras cueilleurs.

## Revendications

1. Machine automotrice enjambeuse pour la récolte des haies fruitières, comprenant, d'une part, un automoteur enjambeur (5) comportant un châssis (6) supporté par des moyens de sustentation (13, 14) réglables en hauteur, et, d'autre part, une tête de récolte (1) comprenant un châssis (2) en forme de portique supportant un système de secouage constitué de deux ensembles de détachement des fruits, montés en vis-à-vis et séparés par un espace vertical, et deux systèmes de réception et de convoyage pour recevoir et acheminer les fruits récoltés jusqu'à un dispositif de réception, les portions horizontales inférieures (3) de ces deux systèmes de convoyage constituant la partie inférieure de la tête de récolte (1), assurant aussi l'étanchéité, au-dessous des ensembles de secouage ; cette tête de récolte (1) étant portée par un bâti de montage (4) fixé rigidement ou destiné à être fixé rigidement à l'arrière dudit véhicule enjambeur automoteur (5), **caractérisée en ce que** la tête de récolte (1) est reliée au bâti de montage (4) par l'intermédiaire de moyens (4a, 7, 8, 10) permettant un réglage en hauteur de celle-ci par rapport au bâti de montage (4), de sorte que lorsque ledit bâti de montage est fixé sur le châssis (6) de l'automoteur enjambeur (5), la tête de récolte se trouve également montée de façon réglable en hauteur par rapport audit automoteur enjambeur, et que la distance (D1) de la partie inférieure (3) de la tête de récolte (1) par rapport au sol (S) reste la même aussi bien lorsque l'automoteur enjambeur se trouve en position basse ou position route, que lorsque ce dernier se trouve placé en position haute correspondant à la position de travail de la machine.

2. Machine automotrice enjambeuse selon la revendication 1 **caractérisé en ce que** le bâti de montage (4) est fixé de manière amovible sur le châssis (6) de l'automoteur enjambeur (5).

3. Machine automotrice enjambeuse selon l'une des revendications 1 ou 2, **caractérisée en ce que** le bâti de montage (4) est relié au châssis porteur (2) de la tête de récolte au moyen de parallélogrammes articulés latéraux (4a, 7, 9-10, 8).

4. Machine automotrice enjambeuse selon la revendication 3, **caractérisée en ce que** chaque parallélogramme articulé latéral comprend : l'un des côtés (4a) du bâti de montage (4), une biellette supérieure (7) et une biellette inférieure (8) reliées, par l'intermédiaire de l'une de leurs extrémités et au moyen d'articulations (7 A, 8A) en partie haute et en partie basse dudit côté, respectivement ; d'autre part, les extrémités opposées desdites biellettes sont reliées, au moyen d'articulations (7B, 8B), respectivement, à des éléments latéraux (9, 10) du châssis (2) de la tête de récolte (1) ; des moyens d'actionnement (11) permettant le déplacement des parallélogrammes articulés (4A, 7, 9-10, 8) assurant les mouvements verticaux de la tête de récolte par rapport au bâti de montage (4) de celle-ci, c'est-à-dire par rapport à l'automoteur enjambeur (5), lorsque cette dernière est installée à l'arrière dudit automoteur enjambeur.

5. Machine automotrice enjambeuse selon la revendication 4, **caractérisée en ce que** les moyens d'actionnement sont constitués par un vérin (11) reliant par l'intermédiaire de ses extrémités opposées et au moyen d'articulations, la biellette supérieure (7) et la partie basse du côté (4A) correspondant du bâti de montage.

6. Machine automotrice enjambeuse selon l'une quelconque des revendications 1 à 5, **caractérisée en ce que** la hauteur du passage sous voûte (P1) de l'automoteur enjambeur (5) est nettement inférieure au passage sous voûte (P2) de la tête de récolte, lorsque l'automoteur enjambeur se trouve en position basse ou position route, alors que la hauteur du passage sous voûte (P1 ') dudit automoteur enjambeur (5) peut être sensiblement égale ou inférieure à la hauteur du passage sous voûte (P2) de ladite tête de récolte (1), lorsque ledit automoteur enjambeur se trouve en position haute correspondant à la position de travail de ladite machine.

7. Machine automotrice enjambeuse selon l'une des revendications 3 à 6, **caractérisée en ce que** le système de sustentation (13, 14) de l'automoteur enjambeur (5) et au moins de l'un des axes d'articulation (7 A, 8A) de l'une au moins des biellettes (7, 8) de l'un au moins des parallélogrammes articulés sont munis de capteurs angulaires (C1, C2) permettant d'asservir le réglage de la position de la tête de récolte (1) par rapport audit automoteur enjambeur (5) de sorte à maintenir ladite tête de récolte à une distance programmée (D1) par rapport au sol (S). Cette distance (D1) restant la même aussi bien lorsque l'automoteur enjambeur se trouve en position basse ou position route, que lorsque ce dernier se trouve placé en position haute correspondant à la position de travail de la machine.

8. Machine automotrice enjambeuse selon la revendication 7, **caractérisée en ce que** l'axe d'articulation (8a) de l'une au moins des biellettes inférieures (8) reliant le bâti de montage (4) au châssis (2) de la tête de récolte est muni d'un capteur angulaire (C1), tandis que l'un au moins des bras de roue arrière (14) de l'automoteur enjambeur (5) est muni d'un capteur angulaire (C2).

## Claims

1. Straddling self-propelled machine for harvesting fruit grown on hedges, comprising, on the one hand, a straddling self-propelled machine (5) including a chassis (6) supported by supporting means (13, 14) adjustable in height and, on the other hand, a harvesting head (1) comprising a chassis (2) in the form of a gantry supporting a shaker system constituted of two fruit detachment assemblies, mounted face-to-face and separated by a vertical space, and two receiving and conveying systems for receiving the harvested fruits and conveying them to a receiving device, the lower horizontal portions (3) of these two conveying systems constituting the lower part of the harvesting head (1), also providing a seal below the shaker assemblies; this harvesting head (1) being carried by a mounting frame (4) rigidly fixed or adapted to be rigidly fixed to the rear of said straddling self-propelled vehicle (5), **characterised in that** the harvesting head (1) is connected to the mounting frame (4) by means (4a, 7, 8, 10) enabling adjustment of the height thereof relative to the mounting frame (4), so that when said mounting frame is fixed to the chassis (6) of the straddling self-propelled machine (5), the harvesting head is also mounted in such a fashion that its height may be adjusted relative to said straddling self-propelled machine, and the distance (D1) of the lower part (3) of the harvesting head (1) from the ground (S) remains the same both when the straddling self-propelled machine is in a lowered position or road position and when it is placed in a high position corresponding to the working position of the machine.

2. Straddling self-propelled machine according to claim 1, **characterised in that** the mounting frame (4) is removably fixed to the chassis (6) of the straddling self-propelled machine (5).

3. Straddling self-propelled machine according to either of claims 1 or 2, **characterised in that** the mounting frame (4) is connected to the chassis (2) carrying the harvesting head by lateral articulated parallelograms (4a, 7, 9-10, 8).

4. Straddling self-propelled machine according to claim 3, **characterised in that** each lateral articulated parallelogram comprises: one of the sides (4a) of the mounting frame (4), an upper link (7) and a lower link (8) connected at one end and by articulations (7A, 8A) in the upper part and in the lower part, respectively, of said side; on the other hand, the opposite ends of said links are connected by respective articulations (7B, 8B) to lateral elements (9, 10) of the chassis (2) of the harvesting head (1); actuation means (11) enabling movement of the articulated parallelograms (4a, 7, 9-10, 8) providing the vertical movements of the harvesting head relative to the mounting frame (4) thereof, that is to say relative to the straddling self-propelled machine (5), when the latter head is installed at the rear of said straddling self-propelled machine.

5. Straddling self-propelled machine according to claim 4, **characterised in that** the actuation means are constituted by an actuator (11) connected at its opposite ends by articulations to the upper link (7) and the bottom part of the corresponding side (4A) of the mounting frame.

6. Straddling self-propelled machine according to any one of claims 1 to 5, **characterised in that** the overall height (P1) of the straddling self-propelled machine (5) is strictly less than the overall height (P2) of the harvesting head when the straddling self-propelled machine is in its low position or road position, while the overall height (P1') of said straddling self-propelled machine (5) may be substantially equal to or less than the overall height (P2) of said harvesting head (1) when said straddling self-propelled machine is in its high position corresponding to the working position of said machine.

7. Straddling self-propelled machine according to any one of claims 3 to 6, **characterised in that** the supporting system (13, 14) of the straddling self-propelled machine (5) and at least one of the articulation axes (7A, 8A) of at least one of the links (7, 8) of at least one of the articulated parallelograms are provided with angular sensors (C1, C2) for slaving the adjustment of the position of the harvesting head (1) relative to said straddling self-propelled machine (5) so as to maintain said harvesting head at a programmed distance (D1) relative to the ground (S), this distance (D1) remaining the same both when the straddling self-propelled machine is in its low or road position and when it is in its high position corresponding to the working position of the machine.

8. Straddling self-propelled machine according to claim 7, **characterised in that** the articulation axis (8A) of at least one of the lower links (8) connecting the mounting frame (4) to the chassis (2) of the harvesting head is provided with an angular sensor (C1) and at least one of the rear wheel arms (14) of the straddling self-propelled machine (5) is provided with an angular sensor (C2).

## Patentansprüche

1. Selbstfahrende Stelzenmaschine für die Ernte von Obstspalieren, die einerseits eine selbstfahrende Stelzeneinheit (5) mit einem Rahmen (6) umfasst, der von höhenverstellbaren Trageinrichtungen (13, 14) getragen wird, und andererseits einen Erntekopf (1) mit einem Rahmen (2) in Portalform umfasst, der ein Rüttelsystem trägt, das aus zwei Einheiten zum Ablösen der Früchte gebildet wird, die einander gegenüberliegend montiert und durch einen vertikalen Raum voneinander beabstandet sind, und zwei Aufnahme- und Fördersysteme zum Aufnehmen und Befördern der geernteten Früchte bis zu einer Aufnahmevorrichtung, wobei die horizontalen unteren Abschnitte (3) dieser beiden Fördersysteme den unteren Teil des Erntekopfs (1) bilden und auch die Dichtheit unterhalb der Rütteleinheiten sicherstellen; wobei dieser Erntekopf (1) von einem Anbaurahmen (4) getragen wird, der an der Rückseite des selbstfahrenden Stelzenfahrzeugs (5) starr befestigt ist oder dazu bestimmt ist, starr befestigt zu werden, **dadurch gekennzeichnet, dass** der Erntekopf (1) mit dem Anbaurahmen (4) über Mittel (4a, 7, 8, 10) verbunden ist, die eine Verstellbarkeit seiner Höhe in Bezug auf den Anbaurahmen (4) gestatten, so dass, wenn der Anbaurahmen an dem Rahmen (6) der selbstfahrenden Stelzeneinheit (5) befestigt ist, der Erntekopf in Bezug auf die selbstfahrende Stelzeneinheit ebenfalls höhenverstellbar montiert ist, und dass der Abstand (D1) des unteren Teils (3) des Erntekopfs (1) in Bezug auf den Boden (S) derselbe bleibt, sowohl wenn die selbstfahrende Stelzeneinheit sich in unterer Stellung oder Straßenfahrposition befindet, als auch wenn sich Letztere in die obere Stellung gesetzt befindet, die der Arbeitsposition der Maschine entspricht.

2. Selbstfahrende Stelzenmaschine nach Anspruch 1, **dadurch gekennzeichnet, dass** der Anbaurahmen (4) abnehmbar an dem Rahmen (6) der selbstfahrenden Stelzeneinheit (5) befestigt ist.

3. Selbstfahrende Stelzenmaschine nach einem der Ansprüche 1 oder 2, **dadurch gekennzeichnet, dass** der Anbaurahmen (4) mit dem Tragrahmen (2) des Erntekopfs mittels seitlicher gelenkig verbundener Parallelogramme (4a, 7, 9 - 10, 8) verbunden ist.

4. Selbstfahrende Stelzenmaschine nach Anspruch 3, **dadurch gekennzeichnet, dass** jedes seitliche gelenkig verbundene Parallelogramm enthält: eine der Seiten (4a) des Anbaurahmens (4), eine obere Anlenkstange (7) und eine untere Anlenkstange (8), die mittels eines ihrer Enden und Gelenkverbindungsmitteln (7A, 8A) am oberen Teil und am unteren Teil der Seite jeweils verbunden sind; andererseits sind die entgegengesetzten Enden der Anlenkstangen mittels Gelenkverbindungen (7B, 8B) jeweils mit seitlichen Elementen (9, 10) des Rahmens (2) des Erntekopfs (1) verbunden; wobei Antriebsmittel (11) die Verschiebung der gelenkig verbundenenen Parallelogramme (4A, 7, 9 - 10, 8) gestatten, wodurch die vertikalen Bewegungen des Erntekopfs in Bezug auf dessen Anbaurahmen (4) sichergestellt werden, d. h. in Bezug auf die selbstfahrende Stelzeneinheit (5), wenn Letzterer an der Rückseite der selbstfahrenden Stelzeneinheit installiert ist.

5. Selbstfahrende Stelzenmaschine nach Anspruch 4, **dadurch gekennzeichnet, dass** die Antriebsmittel aus einem Zylinder (11) gebildet werden, der über seine entgegengesetzten Enden und mittels Gelenkverbindungen die obere Anlenkstange (7) und den unteren Teil der entsprechenden Seite (4A) des Anbaurahmens verbindet.

6. Selbstfahrende Stelzenmaschine nach einem der Ansprüche 1 bis 5, **dadurch gekennzeichnet, dass** die Durchfahrtshöhe (P1) der selbstfahrenden Stelzeneinheit (5) deutlich niedriger als die Durchfahrtshöhe (P2) des Erntekopfs ist, wenn sich die selbstfahrende Stelzeneinheit in unterer Stellung oder Straßenfahrposition befindet, während die Durchfahrtshöhe (P1') der selbstfahrenden Stelzeneinheit (5) im Wesentlichen gleich oder niedriger als die Durchfahrtshöhe (P2) des Erntekopfs (1) ist, wenn sich die selbstfahrende Stelzeneinheit in oberer Position befindet, die der Arbeitsposition der Maschine entspricht.

7. Selbstfahrende Stelzenmaschine nach einem der Ansprüche 3 bis 6, **dadurch gekennzeichnet, dass** das Tragsystem (13, 14) der selbstfahrenden Stelzeneinheit (5) und mindestens eine der Gelenkachsen (7A, 8A) mindestens einer der Anlenkstangen (7, 8) mindestens eines der gelenkig verbundenen Parallelogramme mit Winkelsensoren (C1, C2) ausgestattet sind, die das Steuern der Einstellung der Position des Erntekopfs (1) in Bezug auf die selbstfahrende Stelzeneinheit (5) so ermöglichen, dass der Erntekopf in einem programmierten Abstand (D1) in Bezug auf den Boden (S) gehalten wird, wobei dieser Abstand derselbe bleibt, sowohl wenn die selbstfahrende Stelzeneinheit sich in unterer Stellung oder Straßenfahrposition befindet, als auch wenn sich Letztere in die obere Stellung gesetzt befindet, die der Arbeitsposition der Maschine entspricht.

8. Selbstfahrende Stelzenmaschine nach Anspruch 7, **dadurch gekennzeichnet, dass** die Gelenkachse (8a) mindestens einer der unteren Anlenkstangen (8), die den Anbaurahmen (4) mit dem Rahmen (2) des Erntekopfs verbindet, mit einem Winkelsensor (C1) ausgestattet ist, während mindestens einer der hinteren Radarme (14) der selbstfahrenden Stelzeneinheit (5) mit einem Winkelsensor (C2) ausgestattet ist.
